## Europäisches Patentamt
## European Patent Office
## Office européen des brevets

(19)

(11) Veröffentlichungsnummer: **0 010 113**
**A1**

(12)

# EUROPÄISCHE PATENTANMELDUNG

(21) Anmeldenummer: **78200312.3**

(22) Anmeldetag: **21.11.78**

(51) Int. Cl.³: **F 16 K 31/04**
**F 16 H 35/10**

(30) Priorität: **23.10.78 CH 10920/78**

(43) Veröffentlichungstag der Anmeldung:.
**30.04.80 Patentblatt 80/9**

(84) Benannte Vertragsstaaten:
**BE CH DE FR GB NL SE**

(71) Anmelder: **BBC Aktiengesellschaft Brown,Boveri & Cie**

**CH-5401 Baden(CH)**

(72) Erfinder: **Klikar, Borek, Dipl.-Ing.**
**Bahnhofstrasse 71**
**CH-5430 Wettingen(CH)**

(54) Einrichtung zur Axialkraftbegrenzung, insbesondere für Absperrorgane.

(57) Einrichtung zur Axialkraftbegrenzung, insbesondere für Absperrorgane, mit federbelasteten Rastelementen (18), die zwecks Verhütung einer Ueberbeanspruchung der Gewindespindel (6) die Spindelmutter (8) bei Ueberschreiten einer bestimmten, durch geeignete Wahl der Federn (24,25) einstellbaren Axialkraft in axialer Richtung freigeben.

EP 0 010 113 A1

./...

FIG. 2

## Einrichtung zur Axialkraftbegrenzung, insbesondere für Absperrorgane

Die vorliegende Erfindung betrifft eine Einrichtung zur Axialkraftbegrenzung, insbesondere für Absperrorgane, nach dem Oberbegriff des Patentanspruchs 1.

Bei den üblichen Absperrarmaturen werden die Grenzlagen der beweglichen Teile, im allgemeinen also die Spindelendlagen, mit Wegschaltern überwacht und gesteuert. Versagt diese Steuerung oder wird sie überbrückt, so erfolgt die Ausschaltung des Antriebmotors mit Drehmomentschaltern. Dabei ist aber wegen der Trägheit des Systems Antriebsmotor und Getriebe das auf die beanspruchten Armaturenteile tatsächlich ausgeübte Moment grösser als das am Drehmomentschalter eingestellte Moment. Das tatsächlich auftretende Moment kann dabei so gross werden, dass es die betreffenden Armaturenteile beschädigt, oder z.B. Keilschieber in den Sitz soweit hineindrückt, dass sie nicht mehr geöffnet werden können.

Das gleiche kann auch über das Versagen des Drehmomentschalters gesagt werden. Der Antrieb wird dann in der Regel erst durch den eigenen Thermoschutz ausgeschaltet.

Wegen der unsicheren Reibungsverhältnisse im Antrieb und zwischen Spindelmutter und Spindel ist das Drehmoment ein unzuverlässiges Mass für die axiale Spindelkraft.

Rutschkupplungen werden wegen mangelnder Zuverlässigkeit bei Armaturen nicht eingesetzt.

Eine Auslegung der Armatur auf das maximal mögliche Antriebsmoment würde zu enorm grossen Abmessungen und hohen Kosten führen. Zu den obenerwähnten Unsicherheiten kommen die Beanspruchungen durch Dehnungsdifferenzen infolge Temperaturänderungen zwischen Spindel und Armaturengehäuse, wenn die
Spindel in den Endlagen festsitzt, wobei axiale Verspannungen
mit der Gefahr des Ausknickens oder Zerreissens der Spindel,
Festsitzens bzw. Festfressens von Keilschiebern usw., auftreten können.

Im Falle eines Rohrbruches nach Ventilen, wie z.B. Umschalt-
oder Isolierventilen, kann beim Schliessen die durch die
Druckdifferenz über den Ventilteller entstehende Axialkraft
je nach dem Vordruck und dem Bruchquerschnitt nach der Armatur so gross werden, dass die Spindel unzulässig beansprucht
wird oder das Antriebsmoment nicht mehr ausreicht, um die
Spindel zu bewegen.

Das Nichtschliessen kann z.B. bei Umschaltarmaturen nach
einem Rohrbruch im Vorwärmer die Gefährdung der Turbine
durch Wasser zur Folge haben, da das Wasser über die Bruchstelle in den Dampfraum des Vorwärmers und dann über die Anzapfleitung zur Turbine strömen könnte. Auch in Frischdampf-
oder Speisewasserdruckleitungen von Kernkraftwerken ergeben
sich solche Probleme, da hier Rohrbrüche angenommen werden
müssen, wobei die Armaturen sicher schliessen müssen, um
Radioaktivitätsabgabe an die Umgebung zu verhindern.

Bei Anwendung der heutzutage üblichen Antriebsköpfe mit gefederter Spindelmutter federt diese bei Ueberschreitung der
Federvorspannung durch, so dass die Armatur auch ohne Antriebsmotor geschlossen und die Axialkraft an der Spindel
begrenzt wird. Bei grösseren Nennweiten und Hüben ist jedoch
dieser Armaturenkopf sehr lang. Deshalb werden für diese
Zwecke oft eigenmediumbetätigte Armaturen verwendet. Im
drucklosen Zustand oder bei niedrigen Drücken müssen jedoch
diese Armaturen von Hand oder einem zusätzlichen Antriebsmotor betätigt werden.

Mit der im kennzeichnenden Teil des Patentanspruchs 1 definierten Erfindung sollen die vorerwähnten Nachteile vermieden werden.

Der Erfindungsgegenstand wird im folgenden anhand eines in der Zeichnung dargestellten Ausführungsbeispiels näher beschrieben. In der Zeichnung stellen dar:

Fig. 1 eine Aussenansicht einer erfindungsgemässen Einrichtung in Anwendung auf eine grosse Absperrarmatur, und

Fig. 2 die Einrichtung nach Fig. 1 im Schnitt.

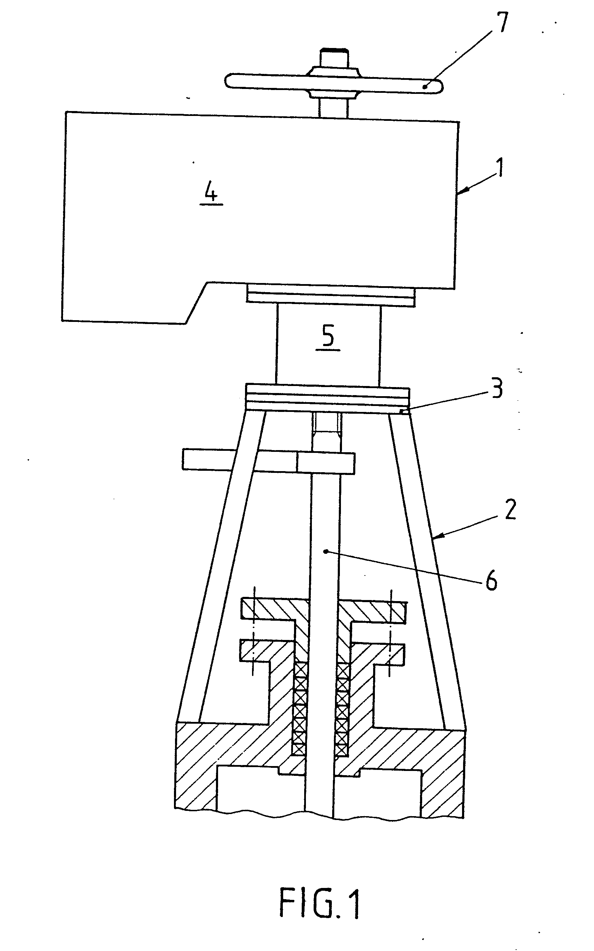

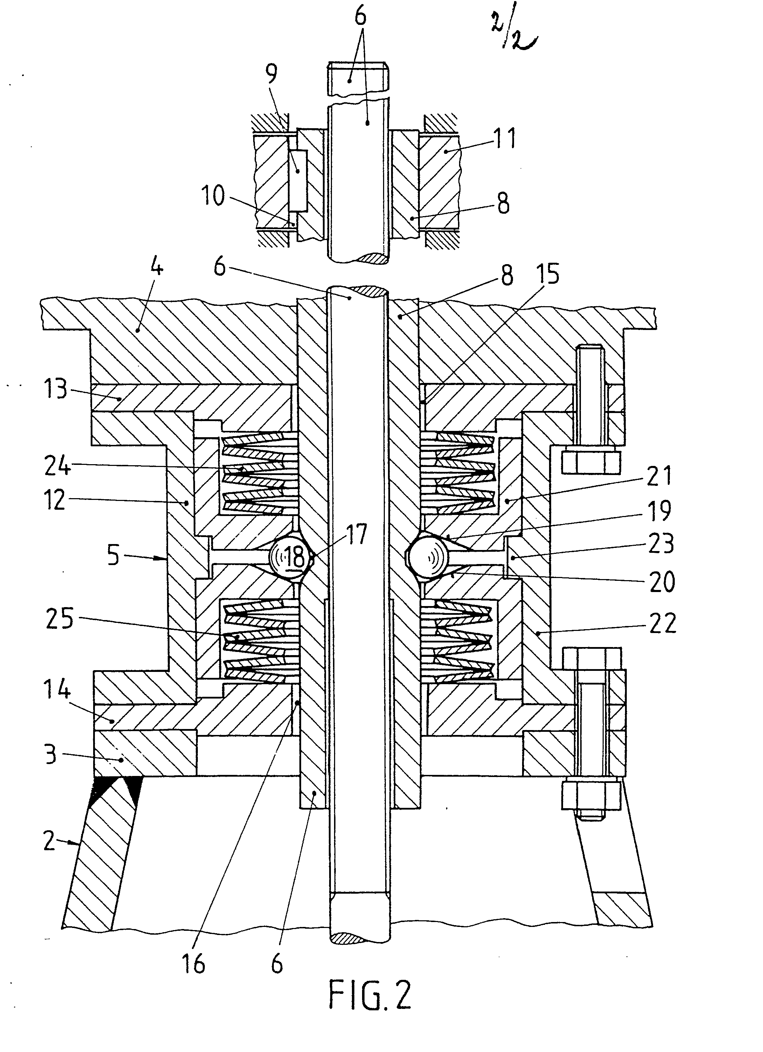

In Fig. 1 ist die Einrichtung zur Axialkraftbegrenzung mit 1 bezeichnet. Sie sitzt auf einer Absperrarmatur, von der nur der obere Teil dargestellt ist und ist an deren Flansch 2.3 befestigt. Der obere Teil der Einrichtung ist die Antriebseinheit 4, die Motor und Getriebe zum Antrieb der Spindelmutter enthält. Der untere Teil der Einrichtung ist die Spindelmutterlagerung 5, die unten anhand der Fig. 2 näher beschrieben wird. Die Gewindespindel 6 erstreckt sich in die Antriebseinheit 4 hinein, wo sie, wie aus Fig. 2 hervorgeht, in der Spindelmutter 8 verschraubbar ist. Am oberen Ende der Antriebseinheit 4 ist ein Handrad 7 zur manuellen Betätigung der Spindel 6 vorgesehen.

Die Spindelmutter ist unterbrochen gezeichnet. An ihrem oberen Ende weist sie eine Passfeder 9 auf, die in einer Nut 10 eines Antriebsrades 11, das mit enger Spielpassung auf der Spindelmutter sitzt, gleiten kann. Das Antriebsrad 11, das von einem nicht dargestellten, in der Antriebseinheit 4 untergebrachten Elektromotor und z.B. einem ebenfalls nicht dargestellten Zahnrad- oder Schneckengetriebe angetrieben wird, ist in axialer Richtung fixiert.

Die Spindelmutterlagerung 5 weist ein Gehäuse 12 auf, das durch einen oberen und einen unteren Flansch 13 bzw. 14 gegen die Antriebseinheit 4 bzw. die Absperrarmatur 2 abgeschlossen ist. Durch Bohrungen 15 und 16 der Flanschen 13 bzw. 14 erstreckt sich die Spindelmutter 8 nach oben in die Antriebseinheit 4 bis über das Antriebsrad 11 und nach unten in die Absperrarmatur 2 hinein. An ihrer Aussenfläche besitzt sie eine Umfangsnut 17, deren Querschnitt ein gleichschenkliges Trapez ist. Diese Umfangsnut nimmt eine Mehrzahl von Kugeln 18 auf, die bei in Längsrichtung festgehaltener Spindelmutter als Querkugellagerung für die Spindelmutter dienen. Als äussere Laufflächen der Kugeln 18 dienen Hohlkegelflächen 19 und 20 zweier Lagerringe 21 bzw. 22, deren kreiszylindrische Aussenflächen längsverschieblich im Gehäuse 12 sitzen. In der Richtung aufeinander ist die Verschiebung dieser Lagerringe durch einen nach innen vorspringenden ringförmigen Anschlag 23 des Gehäuses 12 begrenzt. In der normalen, d.h., in Längsrichtung fixierten Stellung der Spindelmutter 8 liegen die Lagerringe 21 und 22 unter der Vorspannwirkung zweier Tellerfedersäulen 24 und 25, die zwischen den entsprechenden Lagerringen 21, 22 und Flanschen 13, 14 eingespannt sind, an den Schultern des Anschlages 23 an.

Durch entsprechende Wahl der Federcharakteristik und der Vorspannung der Federsäulen 24 und 25 erreicht man, dass die Spindelmutter bis zu einer bestimmten, frei wählbaren Spindelkraft in axialer Richtung durch das von den Kugeln 18, der Ringnut 17 am Umfang der Spindelmutter und den beiden Hohlkegelflächen 19 und 20 in den Lagerringen 21 und 22 gebildete Lager fixiert bleibt. Wird die Spindelmutter gedreht, so bewegt sich die gegen Drehung blockierte Gewindespindel in axialer Richtung, je nach dem Drehsinn der Mutter, nach oben oder nach unten. Bei Ueberschreiten der von der eingestellten Federvorspannung abhängigen Spindelkraft wird die Spindelmutter und mit ihr auch die Spindel in axialer Richtung
freigegeben, indem die Kugeln 18 durch die schrägen Flächen
der Ringnut 17 aus dieser herausgedrückt und in den von
den beiden Hohlkegelflächen 19, 20 der Lagerringe 21, 22
gebildeten Keilspalt hineingedrückt werden und dabei die
Lagerringe gegen den Widerstand der beiden Federsäulen 24,
25 verschieben. Die Spindelmutter ist dann nicht nur in der
Drehrichtung, sondern auch in axialer Richtung frei. Es
wirken auf sie dann nur die Reibungskräfte.

Falls die Ueberschreitung der Axialkraft von einer axialen
Blockierung der Spindel herrührt, so bewegt sich die Spindelmutter nach dem Ausklinken der Kugeln 18 in axialer Richtung. Diese Bewegung kann zur Betätigung eines Endschalters
zwecks Ausschaltens des Antriebsmotors benutzt werden. Falls
dieser Schalter versagt, so wird die Spindelmutter in Axialrichtung so lange weiterverschoben, bis sie mit ihrer Passfeder 9 aus der Nut 10 des Antriebszahnrades 11 herausfährt
oder das Gewinde der Spindel 6 freigegeben hat.

Wird die Spindel durch eine Axialkraft überbelastet, die z.B.
durch eine Druckdifferenz über einen Ventilteller bei einem
Rohrbruch nach einer Armatur auftritt, so wirkt auf die Spindel und damit auch auf die Spindelmutter diese Kraft im
schliessenden Sinne des Ventiltellers und Spindel und Mutter
werden so lange aus der Spindelmutterlagerung herausgezogen,
bis der Ventilteller auf seinem Sitz aufsitzt, und zwar unabhängig davon, ob der Antriebsmotor in Betrieb ist oder nicht.
Diese Axialbewegung der Spindelmutter kann wiederum einen Endschalter betätigen oder einen Schalter zur Schadensmeldung in
den Kommandoraum oder zum Einschalten des Antriebsmotors,
falls dieser ausser Betrieb war, zwecks Rückführung der Spindelmutter in ihre eingerastete, axial fixierte Ausgangs-

0010113

stellung in der Spindelmutterlagerung.

Die Einrichtung wirkt in dem Falle, dass bei geschlossenem Ventilteller unterhalb desselben ein unzulässig hoher Druck auftritt, als Sicherheitsventil, indem der Ventilteller bei Ueberschreiten der durch die Federsäulen 24 und 25 gegebenen Vorspannkraft von seinem Sitz abgehoben wird.

Beanspruchungen durch Dehnungsdifferenzen infolge Temperaturunterschieden zwischen der Spindel und dem Armaturengehäuse bei in den Endlagen festsitzender Spindel werden durch die federbelasteten Lagerringe 21 und 22 kontrolliert begrenzt.

Diese Einrichtung zur Axialkraftbegrenzung kann bei allen Absperrarmaturen, z.B. bei Umschaltarmaturen, Isolierarmaturen usw., angewendet werden. Sie erfüllt die Forderung nach kontrollierbarer Begrenzung der Axialkraft an der Spindel, auch wenn die Weg- und Drehmomentschalter versagen oder überbrückt werden. Bei Umschalt- oder Isolierventilen wird dadurch zusätzlich bei einem Rohrbruch nach der Armatur nicht nur die Spindel vor zu hoher Axialkraft geschützt, sondern auch gewährleistet, dass die Armatur schliesst.

Darüber hinaus eignet sich diese Einrichtung auch für andere Geräte und Arbeitsmaschinen, bei denen eine Begrenzung von Längskräften zwecks Vermeidung von Beschädigungen unerlässlich ist.

139/78 0010113

-9-

Bezeichnungsliste

1   Einrichtung zur Axialkraftbegrenzung
2   Absperrarmatur
3   Flansch
4   Antriebseinheit
5   Spindelmutterlagerung
6   Gewindespindel 6
7   Handrad
8   Spindelmutter
9   Passfeder
10  Nut
11  Antriebsrad
12  Gehäuse
13  Flansch
14  Flansch
15  Bohrung
16  Bohrung
17  Ringnut
18  Kugeln
19  Hohlkegelfläche
20  Hohlkegelfläche
21  Lagerring
22  Lagerring
23  Anschlag
24  Tellerfedersäule
25  Tellerfedersäule

139/78 0010113
18.10.1978
Mü/Fs

BBC Aktiengesellschaft
Brown, Boveri & Cie.
Baden/Schweiz

P a t e n t a n s p r ü c h e

1. Einrichtung zur Axialkraftbegrenzung, insbesondere für Absperrorgane, mit motorischem Antrieb einer Spindelmutter zwecks Längsverschiebung einer in der Spindelmutter verschraubbaren Gewindespindel, mit in Axialrichtung der Gewindespindel nachgiebigen Federelementen sowie mit Endschaltern zur Begrenzung des Spindelhubes, gekennzeichnet durch eine axialverschieblich gelagerte Spindelmutter (8), durch zwei axialverschiebliche, durch Federn (24, 25) belastete Lagerringe (21, 22) mit einander zugewandten Hohlkegelflächen (19, 20), die zusammen einen ringförmigen Keilspalt bilden und Rastelemente (18) aufnehmen, durch eine zum Zusammenwirken mit den Rastelementen (18) bestimmte Ringnut (17) in der Spindelmutter (8), sowie durch eine formschlüssige, eine axiale Verschiebung zulassende drehfeste Verbindung von Spindelmutter (8) und Antriebsrad (11).

2. Einrichtung nach Anspruch 1, dadurch gekennzeichnet, dass die Rastelemente Kugeln (18) sind.

3. Einrichtung nach Anspruch 1, dadurch gekennzeichnet, dass die Federn aus Tellerfedersäulen (24, 25) bestehen.

4. Einrichtung nach Anspruch 1, dadurch gekennzeichnet, dass die formschlüssige, drehfeste Verbindung von Spindelmutter (8) und Antriebsrad (11) eine Passfederverbindung ist.

5. Einrichtung nach Anspruch 1, dadurch gekennzeichnet, dass das Gehäuse (12) der Spindelmutterlagerung einen ringförmigen Anschlag (23) zur Fixierung der Lagerringe (21, 22) in ihrer Mittelstellung aufweist.

0010113

½

FIG.1

139 /78  2/1

0010113

2/2

FIG.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | IBM TECHNICAL DISCLOSURE BULLETIN, IBM Corp, Vol. 15, Nr. 10, März '73 New York, L.A. JOHNSON et al.: "Ball nut actuator" <br> * Seite 3132 * <br><br> -- | 1,2,5 |
| | GB - A - 793 333 (DODGE) <br> * Seite 3, Zeile 11 - Seite 4, Zeile 101 * <br><br> -- | 1,2 |
| | FR - A - 1 397 632 (ELEKTRO-MECHANIC) <br> * Das ganze Dokument * <br><br> -- | 1,2 |
| A | FR - A - 2 266 917 (SULZER) <br> * Seite 1, Zeile 35 - Seite 3, Zeile 24 * <br><br> ---- | 1,3 |

**KLASSIFIKATION DER ANMELDUNG (Int.Cl.²)**

F 16 K 31/04
F 16 H 35/10

**RECHERCHIERTE SACHGEBIETE (Int. Cl.²)**

F 16 K 31/04
      31/05
      31/50
F 16 H 35/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-09-1979 | VERELST |

EPA form 1503.1 06.78